# EUROPÄISCHE PATENTANMELDUNG

(11) **EP 3 330 976 A1**
(43) Veröffentlichungstag der Anmeldung: **06.06.2018**
(21) Anmeldenummer: 17204206.1
(22) Anmeldetag: 28.11.2017
(51) Int. Cl.: H01B 7/42, B60L 11/18

(54) **HOCHSTROMKABEL UND STROMVERSORGUNGSSYSTEM MIT HOCHSTROMKABEL**

(30) Priorität: 05.12.2016 DE 102016224106
(71) Anmelder: LEONI Kabel Holding GmbH, 90402 Nürnberg (DE)
(72) Erfinder: ERNST, Christian, 91781 Weißenburg (DE); GOß, Sebastian, 91154 Roth (DE); HITZ, Bastian, 92353 Postbauer-Heng (DE)
(74) Vertreter: FDST Patentanwälte

(57) **Zusammenfassung**

Die Erfindung betrifft ein Hochstromkabel (2), insbesondere ein Ladekabel, mit einem Außenmantel (12) und mit einer Anzahl sich in Längsrichtung erstreckenden Hochstrom-Adern (8), sowie ein Stromversorgungssystem, insbesondere ein Ladesystem für ein Hybrid- oder Elektrofahrzeug, mit einem entsprechenden Hochstromkabel (2).

## Beschreibung

Die Erfindung betrifft ein Hochstromkabel, insbesondere ein Ladekabel, mit einem Außenmantel und mit einer Anzahl sich in Längsrichtung erstreckenden Hochstrom-Adern sowie ein Stromversorgungssystem, insbesondere ein Ladesystem für ein Hybrid- oder Elektrofahrzeug, mit einem entsprechenden Hochstromkabel.

Als Hochstromkabel werden Kabel bezeichnet, die für die Durchleitung relativ hoher Ströme und somit für die Übertragung relativ hoher elektrischer Leistungen ausgebildet sind. Dabei wird durch die Durchleitung entsprechend hoher Ströme typischerweise eine relativ große Menge Abwärme generiert, durch die sich ein entsprechendes Hochstromkabel im Betrieb relativ deutlich erhitzt.

Dies ist jedoch im Falle diverser Anwendungsszenarien potenziell problematisch, da sich ein solches Hochstromkabel beispielsweise nicht ohne Weiteres in der Nähe temperaturempfindlicher Bauteile oder Baugruppen anordnen und verbauen lässt. Ebenfalls problematisch sind Anwendungsszenarien, bei denen davon auszugehen ist oder bei denen ein erhebliches Risiko besteht, dass Personen mit einem eingesetzten Hochstromkabel in Berührung kommen, da hier sicherzustellen ist, dass sich ein entsprechendes Hochstromkabel im Betrieb nicht so weit erhitzt, dass eine Verletzungsgefahr besteht.

Ein typisches Beispiel hierfür sind sogenannten Ladekabel für Elektrofahrzeuge, durch die während eines Ladevorgangs relativ hohe Ströme geleitet werden und die gleichzeitig derart ausgelegt sein müssen, da sich diese ohne Probleme über einen längeren Zeitraum hinweg berühren lassen.

Ausgehend hiervon liegt der Erfindung die Aufgabe zugrunde, ein vorteilhaft ausgestaltetes Hochstromkabel sowie ein vorteilhaft ausgebildetes Stromversorgungssystem mit einem entsprechenden Hochstromkabel anzugeben.

Diese Aufgabe wird erfindungsgemäß gelöst durch ein Hochstromkabel mit den Merkmalen des Anspruchs 1 sowie durch ein Stromversorgungssystem mit den Merkmalen des Anspruchs 12. Bevorzugte Weiterbildungen sind in den rückbezogenen Ansprüchen enthalten. Die im Hinblick auf Hochstromkabel angeführten Vorteile und bevorzugten Ausgestaltungen sind sinngemäß auch auf das Stromversorgungssystem übertragbar und umgekehrt.

Ein entsprechendes Hochstromkabel ist dabei insbesondere als Ladekabel, beispielsweise als Ladekabel für ein Hybrid- oder Elektrofahrzeug, oder als Robotikleitung, beispielsweise für einen Schweißroboter, ausgebildet und weist eine Anzahl sich in einer Längsrichtung erstreckende Hochstrom-Adern sowie einen Außenmantel auf. Hierbei weist jede Hochstrom-Ader wiederum einen Leiter, beispielsweise einen Litzenleiter oder einen Massivleiter, und eine den Leiter umgebende Aderisolierung auf, die insbesondere auf den Leiter aufextrudiert ist. Zudem weist das Hochstromkabel einen insbesondere extrudierten Kühlmantel mit zumindest einer sich in Längsrichtung erstreckenden Hohlkammer zur Durchleitung eines Kühlmittels auf, sodass sich das Hochstromkabel kühlen lässt, indem ein Kühlmittel durch das Hochstromkabel durchgeleitet oder hindurchgeführt wird.

Auf diese Weise ist dann quasi eine Art Wärmetaucher für einen Kühlkreislauf in das Hochstromkabel integriert, der durch den Kühlmantel ausgebildet ist. Hierdurch lassen sich dann beispielsweise bei für das Hochstromkabel vorgegebener maximaler Oberflächentemperatur von beispielsweise 60 °C größere Ströme durch das Hochstromkabel leiten, als dies bei einem nicht gekühlten oder nur passiv durch die Umgebungsluft gekühlten Hochstromkabel der Fall wäre.

Bei dem Kühlmantel handelt es sich dabei vorzugsweise um einen ringförmigen einstückigen, aufextrudierten Mantel, in dem die zumindest eine Hohlkammer integriert ist. Der Kühlmantel wird daher prozesstechnisch in einfacher Weise durch eine Mantelextrusion ausgebildet, bei der der Kühlmantel auf ein Kernelement aufextrudiert wird.

Der Kühlmantel bildet hierbei gemäß einer Ausführungsvariante den Außenmantel des Hochstromkabels aus und somit insbesondere einen das Hochstromkabel nach außen abschließenden Isoliermantel. Bevorzugt ist jedoch eine Ausführungsvariante, bei der der Kühlmantel Teil einer Hochstrom-Ader ist oder bei der jede Hochstrom-Ader des Hochstromkabels einen Kühlmantel aufweist.

In vorteilhafter Weiterbildung weist weiter jede Hochstrom-Ader einen insbesondere einstückigen und bevorzugt aufextrudierten Kühlmantel mit einer Art Innenring auf, der die Aderisolation der Hochstrom-Ader ausbildet und den Leiter der Hochstrom-Ader unmittelbar als Leiterisolierung umgibt oder umhüllt. Alternativ hierzu ist der Leiter einer Hochstrom-Ader von einer separaten Aderisolierung umgeben, auf die der Kühlmantel aufextrudiert ist.

Weiter ist ein hier vorgestelltes Hochstromkabel zweckdienlicherweise für Ströme größer 5 A, bevorzugt größer 10 A, weiter bevorzugt größer 50 A und insbesondere größer 100 A ausgelegt. Außerdem ist das Hochstromkabel vorzugsweise für Ströme kleiner 1000 A und insbesondere kleiner 500 A ausgebildet. Ein entsprechendes Hochstromkabel ist somit also bevorzugt für eine Stromstärke ausgelegt, die im Bereich zwischen 10 A und 1000 A liegt sowie insbesondere im Bereich zwischen 100 A und 500 A. Zudem ist ein solches Hochstromkabel gemäß einer vorteilhaften Ausführungsvariante für Gleichströme ausgelegt, also insbesondere als Ladekabel für ein Gleichstromladen. Ein entsprechendes Gleichstromladen erfolgt dann beispielsweise bei 1000 V mit 450 A.

Von Vorteil ist zudem eine Ausgestaltung des Hochstromkabels, bei dem dieses ein zentral angeordnetes, sich in Längsrichtung erstreckendes Kernelement aufweist, um welches herum mehrere Hochstrom-Adern angeordnet sind. Jenes Kernelement ist dabei beispielsweise durch eine weitere Hochstrom-Ader, einen Schutzleiter mit oder ohne Isolierung, einen Schlauch oder ein Stützelement ausgebildet.

Günstig ist weiterhin eine Ausgestaltung des Hochstromkabels, bei der dieses einen zentral angeordneten sich in Längsrichtung erstreckenden Schutzleiter aufweist sowie mehrere um den Schutzleiter herum angeordnete Hochstrom-Adern. Jene Hochstrom-Adern sind dann weiter bevorzugt gegebenenfalls unter Zwischenlage einer Schirmung und/oder einer Anzahl Füllelemente mittelbar oder unmittelbar vom Außenmantel umhüllt. Hierbei weist jede Hochstrom-Ader vorteilhafterweise einen Kühlmantel mit mehreren voneinander getrennten und sich jeweils in Längsrichtung erstreckenden Hohlkammern auf, die je nach Anwendungszweck jeweils einen runden, ovalen, rechteckigen oder nach Art eines Ringsegments ausgebildeten Querschnitt aufweisen.

Einer alternativen Ausführungsvariante entsprechend weist das Hochstromkabel einen zentral angeordneten, sich in Längsrichtung erstreckenden Schlauch zur Durchleitung eines Kühlmittels sowie mehrere um den Schlauch herum angeordnete Hochstrom-Adern auf. Auch hier sind die Hochstrom-Adern weiter bevorzugt gegebenenfalls unter Zwischenlage einer Schirmung und/oder einer Anzahl Füller vom Außenmantel umhüllt und zudem bevorzugt weist jede Hochstrom-Ader einen Kühlmantel mit genau einer sich in Längsrichtung erstreckenden Hohlkammer auf. Auch hier ist der Querschnitt der entsprechenden Hohlkammern an den jeweiligen Anwendungszweck angepasst und beispielsweise rund ausgestaltet.

Gemäß einer Ausgestaltungsvariante ist das Hochstromkabel weiter als sogenannte Meterware ausgebildet und wird dementsprechend im Rahmen einer Weiterverarbeitung konfektioniert und dabei zum Beispiel in Segmente unterschiedlicher Länge zerteilt. Alternativ dazu ist das Hochstromkabel zumindest teilweise vorkonfektioniert und weist an zumindest einem Ende eine Anschlusselement mit einem Kühlmittelanschluss auf, wobei der Kühlmittelanschluss mit der zumindest einen sich in Längsrichtung erstreckenden Hohlkammer verbunden ist und wobei das Anschlusselement zum Anschluss an eine Kühlmittelleitung insbesondere eines Kühlkreislaufes ausgebildet ist. Jenes Anschlusselement ist hierbei weiter bevorzugt zudem als Kabelanschlusselement mit elektrischen Anschlusskontakten ausgebildet, also zum Beispiel nach Art eines klassischen Steckers, in den jedoch zusätzlich zumindest ein Kühlmittelanschluss integriert ist, sodass über den Kühlmittelanschluss ein Kühlmittel in die zumindest eine Hohlkammer einleitbar oder herausführbar ist.

Gemäß einer vorteilhaften Weiterbildung weist das entsprechende Anschlusselement zwei voneinander getrennte Kühlmittelanschlüsse für einen Vorlauf und für einen Rücklauf auf, wobei die beiden Kühlmittelanschlüsse bevorzugt mit unterschiedlichen sich in Längsrichtung erstreckenden Hohlkammern verbunden sind. In diesem Fall lässt sich dann zumindest einen Hohlkammer für den Vorlauf und eine weitere Hohlkammer für den Rücklauf in einem Kühlmittelkreislauf nutzen.

Ein zuvor beschriebenes Hochstromkabel ist außerdem, wie bereits zuvor erwähnt, bevorzugt als Ladekabel ausgebildet, insbesondere als Ladekabel für ein Hybrid- oder Elektrofahrzeug, und weist zumindest einen endseitig angeordneten Ladestecker auf mit einer Anzahl elektrischer Kontakte, typischerweise ein elektrischer Kontakt pro Ader und pro Schutzleiter. Jener Ladestecker ist hierbei insbesondere entsprechend der Norm IEC 62196-2 (oder SAE J1772-2009) oder gemäß der Norm EN 62196 ausgestaltet. In einen solchen Ladestecker ist dabei zudem bevorzugt zumindest ein Kühlmittelanschluss integriert, über den sich ein Kühlmittel in das Ladekabel hinein oder heraus führen lässt.

Weiter ist ein zuvor beschriebenes Hochstromkabel bevorzugt Teil eines Stromversorgungssystems, insbesondere eines Ladesystems für ein Hybrid- oder Elektrofahrzeug, und dementsprechend eine an das Stromversorgungssystem angepasste Komponente des Stromversorgungssystems. Ein solches Stromversorgungssystem weist dabei typischerweise eine elektrische Energiequelle, beispielsweise eine sogenannte Ladestation, eine elektrische Energiesenke, wie beispielsweise einen elektrischen Verbraucher oder einen Akkumulator, sowie einen Kühlkreislauf zur aktiven Kühlung des Hochstromkabels auf. Im Betrieb des Stromversorgungssystems ist dann die elektrische Energiequelle zur Übertragung von elektrischer Energie mit der elektrischen Energiesenke über das Hochstromkabel verbunden, wobei währenddessen das Hochstromkabel mit Hilfe des Kühlkreislaufes gekühlt wird. Dabei dient der zumindest eine Kühlmantel im Hochstromkabel als integrierter Wärmetauscher im Kühlkreislauf, mit dessen Hilfe Wärme aus dem Hochstromkabel in das Kühlmittel des Kühlkreislaufes übertragen wird.

Bevorzugt ist hierbei insbesondere eine Ausgestaltung, bei der das Hochstromkabel mehrere Hohlkammern aufweist und bei der zumindest eine Hohlkammer als Vorlauf und zumindest eine Hohlkammer als Rücklauf im Kühlkreislauf dient, sodass das Kühlmittel über die den Vorlauf ausbildende Hohlkammer durch das Hochstromkabel über dessen gesamte Länge hinweg geführt wird und ein weiteres Mal über die den Rücklauf ausbildende Hohlkammer durch das Hochstromkabel über dessen gesamte Länge hinweg geführt wird. Das heißt also, dass in diesem Fall das Kühlmittel bei seinem Weg durch den Kühlkreislauf zweimal über die nahezu volle Länge des Hochstromkabels durch das Hochstromkabel geführt wird.

Ein zuvor beschriebenes Ladekabel ist also insbesondere Teil eines Ladesystems für ein Hybrid- oder Elektrofahrzeug und weist an einem Ende einen Ladestecker auf. Das andere, zweite Ende des Ladekabels ist dann weiter bevorzugt fest installiert, also beispielsweise in einer Ladesäule oder Ladestation fest verbaut oder eingebaut. Ein solches Ladesystem weist dann zweckdienlicherweise ein aktives Kühlsystem auf und besteht im Wesentlichen aus einer Ladestation mit dem Ladekabel und zumindest einem Hybrid- oder Elektrofahrzeug mit einem Akkumulator und mit einer Buchse oder einem Gegenstecker für den Ladestecker. Je nach Anwendungsszenario erfolgt bei einem derartigen Ladesystem im Betrieb entweder nur die Kühlung des Ladekabels oder aber es werden weitere Komponenten im Ladesystem mitgekühlt, beispielsweise die stromführenden Leitungen im Hybrid- oder Elektrofahrzeug von der Buchse bzw. dem Gegenstecker hin zum Akkumulator und/oder der Akkumulator selbst. Die wesentlichen Komponenten des entsprechenden Kühlsystems oder Kühlkreislaufs sind dabei je nach Ausführung bevorzugt in der Ladesäule oder Ladestation oder aber im Hybrid- oder Elektrofahrzeug angeordnet und verbaut. Alternativ weist ein entsprechendes Ladesystem mehr als einen Kühlkreislauf auf, also beispielsweise einen Kühlkreislauf in der Ladesäule oder Ladestation zur Kühlung der Stromführenden Baugruppen bis hin zum Ladestecken und einen Kühlkreislauf im Hybrid- oder Elektrofahrzeug zur Kühlung der stromführenden Leitungen im Hybrid- oder Elektrofahrzeug von der Buchse bzw. dem Gegenstecker hin zum Akkumulator und/oder zur Kühlung des Akkumulators.

Ausführungsbeispiele der Erfindung werden nachfolgend anhand einer schematischen Zeichnung näher erläutert. Darin zeigen:
- FIG 1: in einer Querschnittsdarstellung eine erste Ausführung eines Hochstromkabels,
- FIG 2: in einer Querschnittsdarstellung eine zweite Ausführung des Hochstromkabels,
- FIG 3: in einer Seitenansicht eine dritte Ausführung des Hochstromkabels mit einem Anschlusselement sowie
- FIG 4: in einer Blockschaltbilddarstellung ein Ladesystem mit einem Hochstromkabel.

Einander entsprechende Teile sind in allen Figuren jeweils mit den gleichen Bezugszeichen versehen.

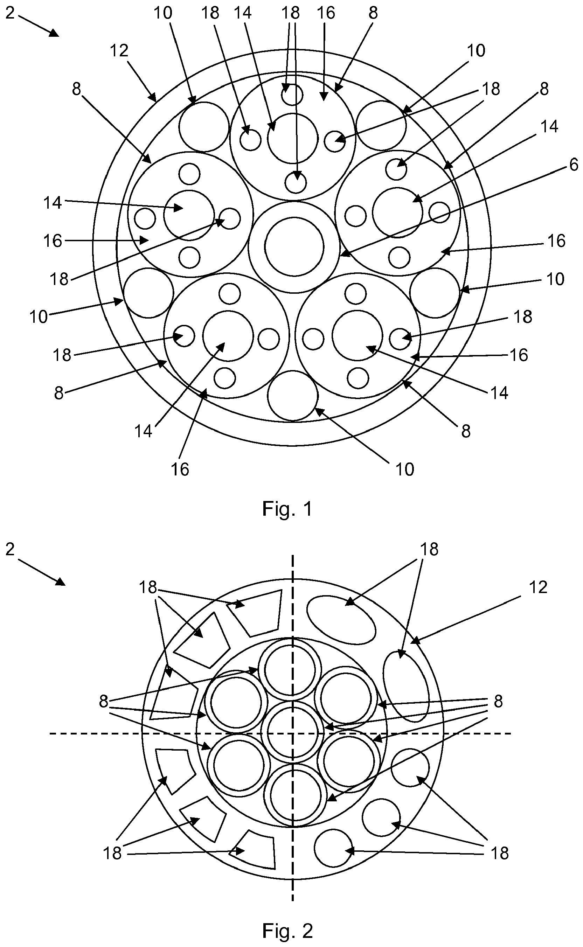

Ein nachfolgend exemplarisch beschriebenes und in Fig. 1 im Querschnitt dargestelltes Hochstromkabel 2 ist insbesondere als Ladekabel für ein Hybrid- oder Elektrofahrzeug ausgebildet und dementsprechend für relativ hohe Ströme, typischerweise größer 100 A jedoch in der Regel kleiner 500 A, ausgelegt.

Jenes Hochstromkabel 2 weist dabei ein zentral angeordnetes, sich in Längsrichtung 4 erstreckendes Kernelement auf, welches durch einen isolierten Schutzleiter 6 ausgebildet ist. Um jenen Schutzleiter 6 herum sind im Ausführungsbeispiel fünf Hochstrom-Adern 8 angeordnet, wobei diese am Schutzleiter 6 einerseits und aneinander andererseits anliegen. Auf diese Anordnung von Hochstrom-Adern 8 ist unter Zwischenlage von fünf Füllelementen oder Füllern 10 ein Außenmantel 12 aufextrudiert, der das Hochstromkabel 2 nach außen abschließt. Die Füller 10 sind hierbei als sich in Längsrichtung 4 erstreckende Profilleisten ausgebildet und dienen dazu, einen möglichst runden Umfang für das Hochstromkabel 2 zu realisieren.

Jede Hochstrom-Ader 8 ist im Ausführungsbeispiel durch einen Leiter 14 sowie einen auf den Leiter 14 aufextrudierten Kühlmantel 16 ausgebildet. Ein entsprechender Kühlmantel 16 weist hierbei vier sich in Längsrichtung 4 erstreckende Hohlkammern 18 auf, durch welche ein Kühlmittel durchleitbar ist. Hierdurch bildet jeder Kühlmantel 16 quasi einen Wärmetauscher aus, der sich in einen Kühlkreislauf 20 einbinden lässt. Gleichzeitig dient der Kühlmantel 16 im Ausführungsbeispiel als Isoliermantel für den entsprechenden Leiter 14, wobei der Kühlmantel 16 hierfür einen ringförmigen inneren Abschnitt, also einer Art Innenring, aufweist, der den entsprechenden Leiter 14 vollständig umhüllt und, so wie der gesamte einstückige Kühlmantel 16, aus einem Isoliermaterial hergestellt ist.

Eine alternative Ausgestaltung des Hochstromkabels 2 ist in Fig. 2 im Querschnitt dargestellt, wobei hier eine Hochstrom-Ader 8 als Kernelement zentral angeordnet ist und sich in Längsrichtung 4 erstreckt. Um diese Hochstrom-Ader 8 herum sind im Ausführungsbeispiel gemäß Fig. 2 sechs weitere Hochstrom-Adern 8 angeordnet, welche wiederum von einem das Hochstromkabels 2 nach außen abschließenden Außenmantel 12 umhüllt sind. Hierbei wird der Außenmantel 12 durch einen Kühlmantel 16 ausgebildet, der mehrere über den Umfang verteilt angeordnete Hohlkammern 18 aufweist. Je nach Anwendungsfall und Anforderungsprofil weisen die Hohlkammern 18 dabei einen ovalen, einen runden, einen trapezförmigen oder einen ringsegmentartigen Querschnitt auf. Diese vier verschiedenen Varianten sind in Fig. 2 in den vier Quadranten der Querschnittsdarstellung wiedergegeben.

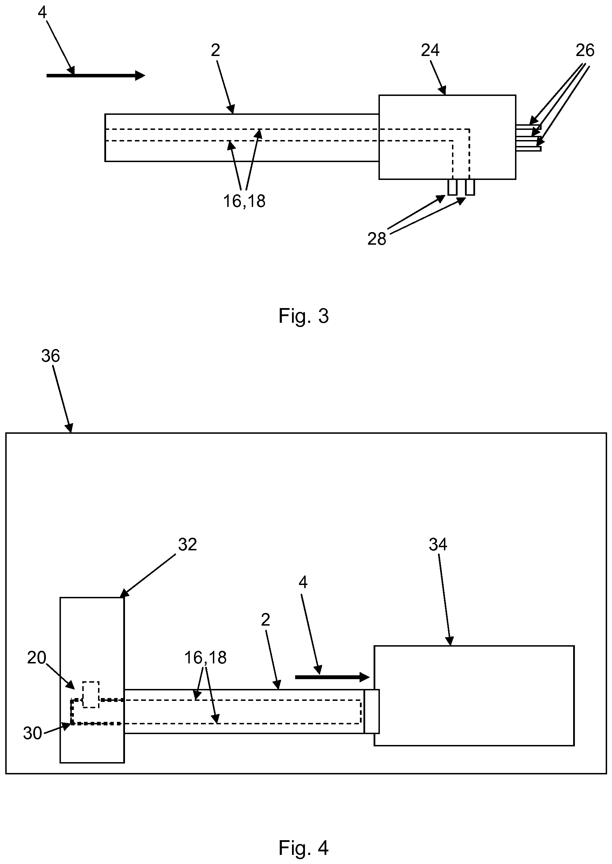

Unabhängig von diesen Ausgestaltungsmerkmalen weist ein entsprechendes Hochstromkabel 2 desweiteren bevorzugt an zumindest einem Ende ein Anschlusselement 24 auf und ist dementsprechend zumindest teilweise vorkonfektioniert. Ein solches Anschlusselement 24 ist, wie in Fig. 3 angedeutet, bevorzugt nach Art eines Steckers ausgebildet und weist dementsprechend eine Anzahl elektrischer Kontakte 26 auf. Darüber hinaus weist das Anschlusselement 24 jedoch noch 2 Kühlmittelanschlüsse 28 auf, über die sich ein Kühlmittel in die Hohlkammern 18 des Hochstromkabels 2 einbringen und/oder herausführen lässt.

Jene Kühlmittelanschlüsse 28 sind dabei für einen Anschluss an eine Kühlmittelleitung 30 ausgebildet, sodass sich das Hochstromkabel 2 auf einfache Weise mit einem Kühlkreislauf 20 verbinden lässt. Eine entsprechende Situation ist in Fig. 4 skizziert. Hier bilden eine Ladestation 32, ein Elektrofahrzeug 34, ein Hochstromkabel 2 sowie ein Kühlkreislauf 20 ein Ladesystem 36 aus. Bei diesem wird für einen Ladevorgang das Hochstromkabel 2 mit dem Elektrofahrzeug 34 verbunden, beispielsweise über eine Steckverbindung, also einen Stecker. Nachfolgend wird elektrische Leistung von der Ladestation 32 über die Hochstrom-Adern 8 des Hochstromkabels 2 an das Elektrofahrzeug 34 übertragen.

Während dieser Leistungsübertragung werden weiter die Hochstrom-Adern 8 des Hochstromkabels 2 mit Hilfe des Kühlkreislaufs 20 der Ladestation 32 gekühlt, wobei hierfür ein Kühlmittel durch das Hochstromkabel 2 hindurch getrieben wird. Hierbei wird das entsprechende Kühlmittel durch die im Hochstromkabel 2 vorhandenen Hohlkammern 18 getrieben, sodass ein jeder Kühlmantel 16 als Wärmetauscher im Kühlkreislauf 20 wirkt, über den Wärme aus den Leitern 14 in das Kühlmittel übertragen wird. Im Ausführungsbeispiel ist dabei im Hochstromkabel 2 für den Kühlkreislauf 20 sowohl ein Vorlauf als auch ein Rücklauf realisiert und dementsprechend wird das Kühlmittel auf seinem Weg durch den Kühlmittelkreislauf 20 zweimal über nahezu die volle Länge des Hochstromkabels 2 durch das Hochstromkabel 2 hindurch getrieben.

Ist das Hochstromkabel 2 hierbei beispielsweise gemäß Fig. 1 ausgestaltet, so wird bevorzugt ein jeder Kühlmantel 16 derart in den Kühlkreislauf 20 eingebunden, dass zumindest eine Hohlkammer 18 eines Kühlmantels 16 als Vorlauf genutzt wird und zumindest eine Hohlkammer 18 des entsprechenden Kühlmantels 16 als Rücklauf genutzt wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Hochstromkabel, insbesondere Ladekabel, aufweisend
- eine Anzahl sich in Längsrichtung erstreckende Hochstrom-Adern, wobei jede Hochstrom-Ader einen Leiter und eine den Leiter umgebende Aderisolierung aufweist,
- einen Außenmantel sowie zumindest einen Kühlmantel mit zumindest einer sich in Längsrichtung erstreckenden Hohlkammer zur Durchleitung eines Kühlmittels.

2. Hochstromkabel nach Anspruch 1,
wobei der Kühlmantel mit den Holkammern als ein extrudierter ringförmiger Mantel ausgebildet ist.

3. Hochstromkabel nach Anspruch 1 oder 2,
wobei jede Hochstrom-Ader einen Kühlmantel aufweist.

4. Hochstromkabel nach Anspruch 3,
wobei jede Hochstrom-Ader einen Kühlmantel mit einem Innenring aufweist, der die Aderisolation der Hochstrom-Ader ausbildet und den Leiter der Hochstrom-Ader unmittelbar als Leiterisolierung umgibt.

5. Hochstromkabel nach einem der Ansprüche 1 bis 4,
ausgebildet für Ströme größer 10 A und insbesondere größer 100 A.

6. Hochstromkabel nach einem der Ansprüche 1 bis 5,
aufweisend ein zentral angeordnetes, sich in Längsrichtung erstreckendes Kernelement sowie mehrere um das Kernelement herum angeordnete Hochstrom-Adern.

7. Hochstromkabel nach einem der Ansprüche 1 bis 5,
aufweisend einen zentral angeordneten, sich in Längsrichtung erstreckenden Schutzleiter sowie mehrere um den Schutzleiter herum angeordnete Hochstrom-Adern, wobei jede Hochstrom-Ader einen Kühlmantel mit mehreren voneinander getrennten und sich jeweils in Längsrichtung erstreckende Hohlkammern aufweist.

8. Hochstromkabel nach einem der Ansprüche 1 bis 5,
aufweisend einen zentral angeordneten, sich in Längsrichtung erstreckenden Schlauch zur Durchleitung eines Kühlmittels sowie mehrere um den Schlauch herum angeordnete Hochstrom-Adern, wobei jede Hochstrom-Ader einen Kühlmantel mit genau einer sich in Längsrichtung erstreckenden Hohlkammer aufweist.

9. Hochstromkabel nach einem der Ansprüche 1 bis 8,
bei dem an zumindest einem Ende ein Anschlusselement mit einem Kühlmittelanschuss ausgebildet ist, wobei der Kühlmittelanschuss mit der zumindest einen sich in Längsrichtung erstreckenden Hohlkammer verbunden ist, wobei das Anschlusselement zum Anschluss an eine Kühlmittelleitung ausgebildet ist und wobei das Anschlusselement insbesondere zudem als Kabelanschlusselement mit elektrischen Anschlusskontakten ausgebildet ist.

10. Hochstromkabel nach Anspruch 9,
wobei das Anschlusselement zwei Kühlmittelanschlüsse für einen Vorlauf und einen Rücklauf aufweist und wobei die beiden Kühlmittelanschlüsse mit unterschiedlichen sich in Längsrichtung erstreckenden Hohlkammern verbunden sind.

11. Hochstromkabel nach einem der Ansprüche 1 bis 10,
welches als Ladekabel für ein Hybrid- oder Elektrofahrzeug ausgebildet ist mit zumindest einem endseitig angeordneten Ladestecker, wobei der Ladestecker elektrische Kontakte sowie zumindest einen Kühlmittelanschluss aufweist.

12. Stromversorgungssystem, insbesondere Ladesystem für ein Hybrid- oder Elektrofahrzeug, mit einem Hochstromkabel nach einem der vorherigen Ansprüche
aufweisend eine elektrische Energiequelle, eine elektrische Energiesenke sowie einen Kühlkreislauf zur aktiven Kühlung des Hochstromkabels, wobei die elektrische Energiequelle und die elektrische Energiesenke zur Übertragung von elektrischer Energie im Betrieb über das Hochstromkabel miteinander verbunden sind und wobei der zumindest eine Kühlmantel im Betrieb den Kühlkreislauf mit ausbildet.

13. Stromversorgungssystem nach Anspruch 12,
wobei der Kühlkreislauf derart ausgebildet ist, dass im Betrieb ein darin geführtes Kühlmittel durch eine sich in Längsrichtung erstreckende, einen Vorlauf ausbildende Hohlkammer durch das Hochstromkabel über dessen gesamte Länge hinweg geführt wird und dass das Kühlmittel durch eine weitere sich in Längsrichtung erstreckende, einen Rücklauf ausbildende Hohlkammer durch das Hochstromkabel über dessen gesamte Länge hinweg zurückgeführt wird.
